# EUROPEAN PATENT SPECIFICATION

(11) **EP 4 017 048 B1**
(45) Date of publication and mention of the grant of the patent: **01.10.2025**
(21) Application number: 19941202.4
(22) Date of filing: 15.08.2019
(51) Int. Cl.: H04W 72/02, H04L 5/00, H04W 8/24, H04W 76/15

(54) **TERMINAL, RADIO BASE STATION, RADIO COMMUNICATION SYSTEM AND RADIO COMMUNICATION METHOD**
ENDGERÄT, FUNKBASISSTATION, FUNKKOMMUNIKATIONSSYSTEM UN FUNKKOMMUNIKATIONSVERFAHREN
APPAREIL, STATION DE BASE RADIO, SYSTÈME DE COMMUNICATION RADIO ET PROCÉDÉ DE COMMUNICATION RADIO

(43) Date of publication of application: 22.06.2022
(73) Proprietor: NTT DOCOMO, INC., Chiyoda-Ku Tokyo 100-6150 (JP)
(72) Inventor: TAKADA, Takuma, Tokyo 100-6150 (JP); UMEDA, Hiromasa, Tokyo 100-6150 (JP); OGUMA, Yuta, Tokyo 100-6150 (JP)
(74) Representative: Hoffmann Eitle
(86) International application number: PCT/JP2019/032081
(87) International publication number: WO 2021/029080

(56) References cited:
- EP-A1- 3 496 301
- US-A1- 2015 215 944
- US-A1- 2015 215 944
- US-A1- 2016 270 139
- NTT DOCOMO ET AL: "Handling of frequency overlapping inter-band EN-DC", vol. RAN WG4, no. Xian, China; 20190408 - 20190412, 1 April 2019 (2019-04-01), XP051713959, Retrieved from the Internet <URL:http://www.3gpp.org/ftp/tsg%5Fran/WG4%5FRadio/TSGR4%5F90Bis/Docs/R4%2D1903547%2Ezip> [retrieved on 20190401]
- HUAWEI ET AL: "Discussion on EN-DC contiguous and non-contiguous signalling", vol. RAN WG2, no. Spokane, Washington, USA; 20181112 - 20181116, 2 November 2018 (2018-11-02), XP051481906, Retrieved from the Internet <URL:http://www.3gpp.org/ftp/tsg%5Fran/WG2%5FRL2/TSGR2%5F104/Docs/R2%2D1818026%2Ezip> [retrieved on 20181102]
- HUAWEI ET AL: "CR to clarify ul-TimingAlignmentEUTRA-NR", vol. RAN WG2, no. Reno, Nevada, USA; 20190513 - 20190517, 2 June 2019 (2019-06-02), XP051748022, Retrieved from the Internet <URL:http://www.3gpp.org/ftp/Meetings%5F3GPP%5FSYNC/RAN/Docs/RP%2D191375%2Ezip> [retrieved on 20190602]
- "Handling of frequency overlapping inter-band EN-DC", 3GPP TSG RAN WG4 #90BIS R4-1903547, 1 April 2019 (2019-04-01), XP051713959, Retrieved from the Internet <URL:https://www.3gpp.org/ftp/tsgran/WG4_Radio/TSGR490Bis/Docs/R4-1903547.zip> [retrieved on 20200305]
- HUAWEI ET AL.: "Discussion on EN-DC contiguous and non-contiguous signaling", 3GPP TSG RAN WG2 #104 R2-1818026, 2 November 2018 (2018-11-02), XP051481906, Retrieved from the Internet <URL:https://www.3gpp.org/ftp/tsg-ran/WG2_RL2/TSGR2_104/Docs/R2-1818026.zip> [retrieved on 20200305]

## Description

### Technical Field

The present invention relates to a terminal, a radio base station, a radio communication system and a radio communication method.

### Background Art

3rd Generation Partnership Project (3GPP) specifies Long Term Evolution (LTE) and is now further specifying LTE-Advanced (hereinafter, called "LTE" including the LTE-Advanced) and a 5th generation mobile communication system (also called "5G", "New Radio (NR)", or "Next Generation (NG)") for further increase in LTE speed.

3GPP Release 15 defines a notification method of providing Band combination, which is a combination of frequency bands at which a terminal (User Equipment, UE) can transmit/receive radio signals (specifically, carriers) (Non-Patent Literature 1).

Specifically, the terminal generates one Band combination by combining the numbers of frequency bands (band numbers) supported thereby. The terminal can generate a plurality of such Band combinations.

For E-UTRA-NR Dual Connectivity (EN-DC) within the same frequency band (Intra-band), the terminal can provide, for each Band combination, information indicating whether it supports "Contiguous" where component carriers (CCs) are contiguously allocated on the frequency band, or supports "Non-contiguous" where CCs are non-contiguously allocated on one or a plurality of frequency bands. Specifically, information element (IE) called "MRDC-Parameters" is used.

The MRDC-Parameters define a field called "intraBandENDC-Support-v1540" to clearly indicate whether the terminal supports one of Contiguous and Non-contiguous or both of them.

On the other hand, for EN-DC over different frequency bands (Inter-band), some Band combinations defined for the Inter-band EN-DC are agreed to be subject to specifications for the Intra-band EN-DC (Non-Patent Literature 2). Also, the possibility of both intra-band carrier aggregation using contiguous and non-contiguous component carrier aggregation per band is known (e.g., from Patent Literature 1 or 2).

### Citation list

### Non-Patent Literatures and Patent Literatures

Non-Patent Literature 1: 3GPP TS 38.331 V15.6.0, 3rd Generation Partnership Project; Technical Specification Group Radio Access Network; NR; Radio Resource Control (RRC) protocol specification (Release 15), 3GPP, June 2019.
Non-Patent Literature 2: "Draft CR for clarification of note for B42_n77 and B42_n78 to TS 38.101-3", R4-1907424, 3GPP TSG-RAN WG4 Meeting #91, 3GPP, May 2019.
Non-Patent Literature 3: NTT DOCOMO ET AL: "Handling of frequency overlapping inter-band EN-DC", 3GPP DRAFT; R4-1903547 HANDLING OF FREQUENCY OVERLAPPING EN-DC _R1,3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRAN, vol. RAN WG4, no. Xian, China; 20190408 - 20190412 1 April 2019 (2019-04-01).
Non-Patent Literature 4: HUAWEI ET AL: "Discussion on EN-DC contiguous and non-contiguous signalling", 3GPP DRAFT; R2-1818026 DISCUSSION ON EN-DC CONTIGUOUS AND NON-CONTIGUOUS SIGNALLING, 3RD GENERATION PARTNERSHIP PROJECT (3GPP), MOBILE COMPETENCE CENTRE; 650, ROUTE DES LUCIOLES; F-06921 SOPHIA-ANTI, vol. RAN WG2, no. Spokane, Washington, USA; 20181112 - 20181116 2 November 2018 (2018-11 -02)
Non-Patent Literature 5: HUAWEI ET AL: "CR to clarify ul-TimingAlignmentEUTRA-NR", 3GPP DRAFT; 38306_CR0094R1_(REL-15) _R2-1907562 CR TO CLARIFY UL-TIMINGALIGNMENTEUTRA-NR, 3RD GENERATION PARTNERSHIP PROJECT (3GPP), MOBILE COMPETENCE CENTRE; 650, ROUTE DES LUCIOLES; F-06921 SOPHIA-, vol. RAN WG2, no. Reno, Nevada, USA; 20190513 - 20190517 2 June 2019 (2019-06-02)

Patent Literature 1: US 2016/270139 A1
Patent Literature 2: EP 3 496 301 A1
Patent Literature 3: US 2015/215944 A1

### Summary of Invention

Also for the Inter-band EN-DC (hereinafter, appropriately called "Intra-band comparable Inter-band EN-DC") subject to the specifications for the Intra-band EN-DC, there can be cases where the terminal supports one of Contiguous and Non-contiguous and where the terminal supports both of them.

However, the terminal cannot notify a network of such a support status for Non-contiguous and Contiguous.

The present invention has been made in view of such a situation, and an object thereof is to provide a terminal capable of notifying a network of the frequency allocation of component carriers that can be supported thereby even when some band combinations defined for the inter-band dual connectivity are subject to specifications for the intra-band dual connectivity. This object is achieved by the subject-matter of the independent claims. The dependent claim/s describe further preferred embodiments, and this description explains how the present invention may be carried out.

According to an aspect of the present disclosure, there is provided a terminal including a control part (control part 240) that determines frequency allocation (Contiguous/Non-contiguous) of carriers that a terminal (UE 200) supports and a transmission part that transmits, to a network, allocation information (reused intraBandENDC-Support-v1540 or interBandENDC-Support) that is used to identify the determined frequency allocation, the frequency allocation being applied to dual connectivity over different specific frequency bands.

### Brief Description of Drawings

Fig. 1 is a view illustrating the entire schematic configuration of a radio communication system 10.
Fig. 2 is a view illustrating the functional block configuration of a UE 200.
Fig. 3 is a view illustrating a configuration example of UE Capability Information.
Fig. 4 is a view illustrating an example of a support status for carrier frequency allocation in the UE 200 on LTE and NR frequency bands.
Fig. 5 is a view illustrating an example of a notification sequence of the UE Capability Information.
Fig. 6 is a view illustrating an example of a hardware configuration of the UE 200.

### Description of Embodiments

Hereinafter, an embodiment of the present invention will be described based on the drawings. The same reference numerals are given to components having the same function or constitution, and description thereof will be omitted appropriately.

### (1) Entire Schematic Configuration of Radio Communication System

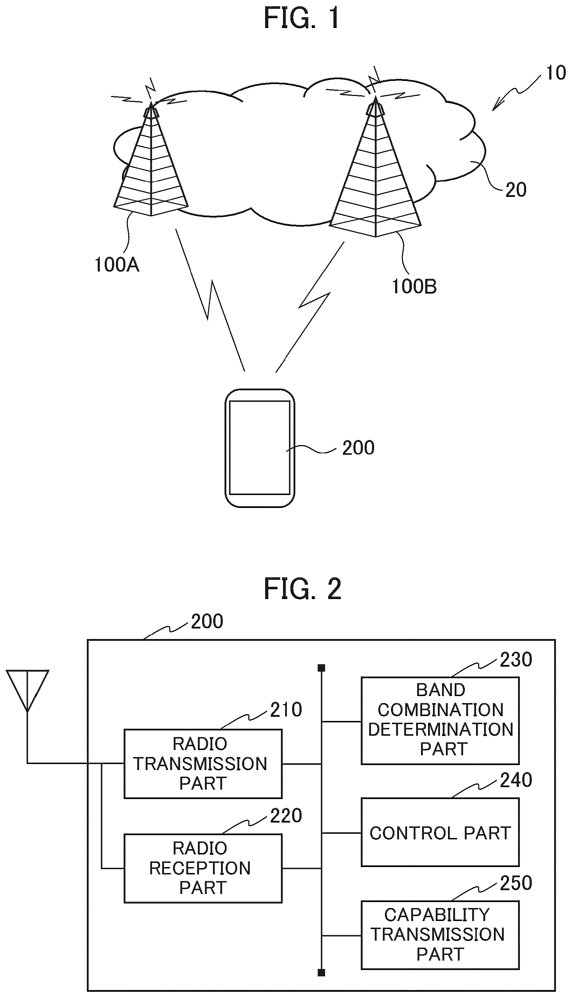

Fig. 1 is a view illustrating the entire schematic configuration of a radio communication system 10 according to the present embodiment. The radio communication system 10 is a radio communication system conforming to Long Term Evolution (LTE) and 5G New Radio (NR) and includes a radio access network 20 (hereinafter, abbreviated as RAN 20) and a user terminal 200 (User Equipment 200 (hereinafter, abbreviated as UE 200).

The RAN 20 is a radio access network including an Evolved Universal Terrestrial Radio Access Network (E-UTRAN) and a Next Generation-Radio Access Network (NG-RAN).

The RAN 20 includes radio base stations 100A and 100B (hereinafter, abbreviated as eNB 100A and gNB 100B). The specific configuration of the radio communication system 10, including the numbers of the eNBs, gNBs, and UEs, is not limited to the example illustrated in Fig. 1.

The RAN 20 actually includes a plurality of RAN Nodes, specifically, LTE-based eNBs and NR-based gNBs and is connected to a core network (EPC/5GC, not illustrated) conforming to the LTE/5G. The RAN 20 and the core network may be collectively expressed as a network.

The eNB 100A and gNB 100B perform radio communication with the UE 200 according to LTE or 5G. The eNB 100A, gNB 100B, and UE 200 can support MIMO that generates a beam with higher directivity by controlling radio signals transmitted from a plurality of antenna elements, carrier aggregation (CA) using a plurality of aggregated component carriers (CCs), and dual connectivity (DC) for simultaneous communication between the UE and the plurality of NG-RAN Nodes.

In particular, the radio communication system 10 supports E-UTRA-NR Dual Connectivity (EN-DC) which is a DC between the LTE and NR. The radio communication system 10 may support another type of DC, specifically, NR-NR Dual Connectivity (NR-DC) or NR-E-UTRA Dual Connectivity (NE-DC).

Further, in the present embodiment, the radio communication system 10 supports both Intra-band EN-DC and Inter-band EN-DC.

The UE 200 can generate one Band combination by combining the numbers of frequency bands (band numbers) supported thereby and notify the network of the generated Band combination as UE Capability Information.

Further, when executing the CA or DC using a plurality of carriers (specifically, CCs), the UE 200 can notify the network of information indicating whether it supports contiguous allocation (Contiguous) of the plurality of carriers on the frequency band and/or non-contiguous allocation (Non-contiguous) of the carriers on the frequency band.

Further, in the present embodiment, for the Inter-band EN-DC, some Band combinations defined for the Inter-band EN-DC are subject to specifications for the Intra-band EN-DC.

Such Inter-band EN-DC subject to specifications of the Intra-band EN-DC is hereinafter called "Intra-band comparable Inter-band EN-DC" appropriately.

### (2) Functional Block Configuration of Radio Communication System

The following describes the functional block configuration of the radio communication system 10. Specifically, the functional block configuration of the UE 200 will be described. Fig. 2 is a view illustrating the functional block configuration of the UE 200.

As illustrated in Fig. 2, the UE 200 includes a radio transmission part 210, a radio reception part 220, a band combination determination part 230, a control part 240, and a capability transmission part 250.

The radio transmission part 210 transmits an uplink signal (UL signal) according to the NR. The radio reception part 220 receives a down-link signal (DL signal) according to the NR.

Specifically, the radio transmission part 210 and radio reception part 220 perform radio communication through a control channel or a data channel.

The control channel includes, for example, a PDCCH (Physical Downlink Control Channel), a PUCCH (Physical Uplink Control Channel), a PRACH (Physical Random Access Channel), and a PBCH (Physical Broadcast Channel).

The data channel includes, for example, a PDSCH (Physical Downlink Shared Channel), and a PUSCH (Physical Uplink Shared Channel).

Reference signals include a Demodulation reference signal (DMRS), a Sounding Reference Signal (SRS), a Phase Tracking Reference Signal (PTRS), and a Channel State Information-Reference Signal (CSI-RS). The signals can include a channel and a reference signal. Data mentioned here may be data transmitted through the data channel.

The band combination determination part 230 determines the combination of the frequency bands that the UE 200 supports. Specifically, the band combination determination part 230 determines the combination of the frequency bands (Band combination) at which the UE 200 can transmit/receive radio signals. The radio signal may be replaced with a carrier, a frequency carrier, or a component carrier (CC).

The band combination determination part 230 generates one Band combination by combining the numbers of supported frequency bands (band numbers). The band combination determination part 230 can generate a plurality of such Band combinations.

The control part 240 controls individual functional blocks constituting the UE 200. In the present embodiment, the control part 240 makes the band combination determination part 230 determine the combination of the frequency bands that the UE 200 supports based on frequency band information.

In particular, the control part 240 makes the band combination determination part 230 determine the frequency allocation of carriers that the UE 200 supports, specifically, the frequency allocation of component carriers (CCs) during execution of the dual connectivity based on information concerning the frequency band that the UE 200 supports.

The dual connectivity performed in the present embodiment is assumed to be EN-DC. The "frequency allocation of component carriers" mentioned here refers to the frequency allocation when at least some Band combinations defined for the Inter-band EN-DC are subject to specifications for the Intra-band EN-DC, that is, the frequency allocation of component carriers that can be supported in the Intra-band comparable Inter-band EN-DC, and this frequency allocation is applied to a specific Inter-band EN-DC.

The capability transmission part 250 transmits, to the network, information indicating capability of the UE 200 concerning radio communication and the like.

Specifically, the capability transmission part 250 uses signaling of an upper layer (e.g., a radio resource control layer (RRC)) to transmit the UE Capability Information of the UE 200 to the network.

In particular, in the present embodiment, the capability transmission part 250 transmits, to the network, allocation information that can be used to identify the frequency allocation of the carriers (specifically, component carriers) determined by the band combination determination part 230 and control part 240. In the present embodiment, the capability transmission part 250 constitutes a transmission part.

Further, the capability transmission part 250 can transmit, to the network, the allocation information together with the combination of the frequency bands (Band combination) determined by the band combination determination part 230.

The allocation information can include information indicating whether the UE 200 supports contiguous allocation (Contiguous) of carriers on the frequency band and/or non-contiguous allocation (Non-contiguous) of a plurality of the carriers on the frequency band.

The allocation information may be equivalent to intraBandENDC-Support-v1540 specified in 3GPP TS38.331 or may be constituted of a new field (or information element).

### (3) Operation of Radio Communication System

The following describes the operation of the radio communication system 10. Specifically, the following describes operation concerning notification, to the network, of the Band combination and contiguous allocation (Contiguous) on the frequency band and/or non-contiguous allocation of the carriers (Non-contiguous) on the frequency band, which are performed by the UE 200.

### (3.1) Configuration Example of Capability Information

First, a configuration example of the UE Capability Information transmitted by the UE 200 will be described.

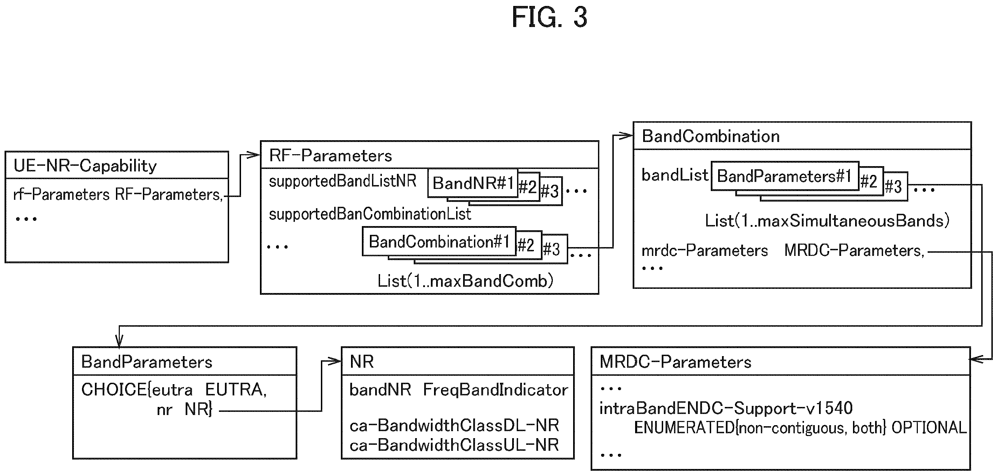

Fig. 3 illustrates a configuration example of the UE Capability Information. Specifically, Fig. 3 illustrates a configuration example of UE-NR-Capability which is a kind of the UE Capability Information.

As illustrated in Fig. 3, UE-NR-Capability includes RF-Parameters, and the RF-Parameters include, in a list form, the Band combinations that the UE 200 supports.

The Band combination includes a plurality of BandParameters, which constitute the Band combination.

In the BandParameters, one of E-UTRA and NR is designated. In FreqBandIndicator, one band number is set.

For the Intra-band EN-DC, the MRDC-Parameters can set a support status for Contiguous and Non-contiguous for each Band combination.

Specifically, the MRDC-Parameters includes intraBandENDC-Support-v1540.

The intraBandENDC-Support-v1540 can provide information included in Table 1 regarding Contiguous and Non-contiguous.

**[Table 1]**

| intraBandENDC-Support-v1540 | contiguous | non-contiguous |
|---|---|---|
| Option disabled | Yes | No |
| non-contiguous | No | Yes |
| both | Yes | Yes |

Specifically, notification of a support status of only supporting Non-contiguous (Non-contiguous) or supporting both Non-contiguous and Contiguous (Both) can be performed by means of the intraBandENDC-Support-v1540. When the intraBandENDC-Support-v1540 is not reported (when option is disabled), the network determines that only Contiguous is supported.

### (3.2) Notification Operation Example

The following describes an example of notification operation of the UE 200 notifying the network of the Band combination and Contiguous and/or Non-contiguous to the network by the UE 200.

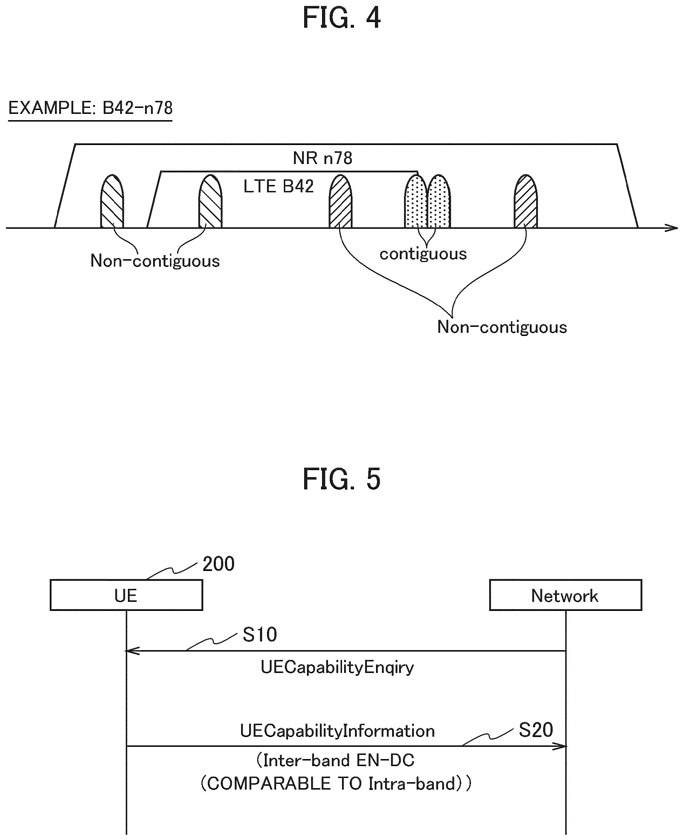

Fig. 4 illustrates an example of the support status for the carrier frequency allocation in the UE 200 on LTE and NR frequency bands. Specifically, Fig. 4 illustrates an example of a combination of frequency band B42 of the LTE and frequency band n78 of the NR.

It is assumed here that, as described above, as for the Inter-band EN-DC, some Band combinations defined for the Inter-band EN-DC are subject to specifications for the Intra-band EN-DC, that is, the example of Fig. 4 is assumed to be the frequency allocation in the Intra-band comparable Inter-band EN-DC.

As described in the above Non-Patent Literature 2, some Band combinations defined for the Inter-band EN-DC are subject to specifications for the Intra-band EN-DC; however, in such a case as well, there can be cases where the UE 200 supports one of the Contiguous and Non-contiguous and where the UE 200 supports both of them. In the present notification operation example, it is possible to reliably notify the network of such a support status of the UE 200 for the Contiguous and/or Non-contiguous.

As illustrated in Fig. 4, the UE 200 can support both the Contiguous frequency allocation of carriers (CCs) and Non-contiguous frequency allocation in the frequency bands (B42 and n78).

To notify the network of such a support status of the frequency allocation in the UE 200, the UE 200 notifies the network of the UE Capability Information.

Fig. 5 illustrates an example of a notification sequence of the UE Capability Information. As illustrated in Fig. 5, in response to a query (UE Capability Enquiry) from the network (S10), the UE 200 sends back the UE Capability Information to the network (S20).

The UE Capability Information sent back here includes the above-mentioned UE-NR-Capability (see Fig. 3). The UE 200 can include, in the UE-NR-Capability, information (allocation information) indicating a support status for Contiguous and/or Non-contiguous in the Intra-band comparable Inter-band EN-DC.

Specifically, a support status for Contiguous and/or Non-contiguous in the Intra-band comparable Inter-band EN-DC may be provided to the network by reusing the intraBandENDC-Support-v1540.

Alternatively, new capability information, specifically, a field (or information element (IE)) may be provided for the Intra-band comparable Inter-band EN-DC. For example, a field or IE such as "interBandENDC-Support" may be defined.

In this case, as in the intraBandENDC-Support-v1540 of Table 1, the interBandENDC-Support may notify the network of a support status of only supporting Non-contiguous (Non-contiguous) or supporting both Non-contiguous and Contiguous (Both) by means of the intraBandENDC-Support-v1540, and when the interBandENDC-Support is not provided as notification (option disabled), the network determines that only Contiguous is supported.

Alternatively, in the case of the Intra-band comparable Inter-band EN-DC, when the interBandENDC-Support (or intraBandENDC-Support-v1540 to be reused) is not provided as notification, the network may determine that both Contiguous and Non-contiguous are supported, rather than assuming that only the Contiguous is supported.

The notification using the UE Capability Information of Fig. 5 is illustrative, and the allocation information may be provided as notification to the network by another signaling as long as the same allocation information as that indicated by means of the interBandENDC-Support can be provided.

### (4) Functions and Effects

The above-described embodiment provides the following functions and effects. Specifically, the UE 200 can transmit, to the network, allocation information (reused intraBandENDC-Support-v1540 or interBandENDC-Support) that can be used to identify the frequency allocation (Contiguous/Non-contiguous or both) of carriers (specifically, component carriers) that the UE 200 can support.

Further, the frequency allocation means the frequency allocation of component carriers that can be supported in the Intra-band comparable Inter-band EN-DC and is applied to a specific Inter-band EN-DC.

That is, the UE 200 can notify the network of the frequency allocation of component carriers that can be supported in the Intra-band comparable Inter-band EN-DC where some Band combinations defined for the Inter-band EN-DC are subject to specifications for the Intra-band EN-DC.

In the present embodiment, the UE 200 can transmit, to the network, the allocation information together with the Band combination that can be supported by the UE 200. Thus, it is possible to notify the network of the allocation information by using existing architecture of UE Capability Information, specifically, the UE-NR-Capability (see Fig. 3). Thus, it is possible to support the Intra-band comparable Inter-band EN-DC while reducing influence on the specification of 3GPP.

Further, with the configuration where the UE 200 notifies the network of the frequency allocation of component carriers that it can support in such Intra-band comparable Inter-band EN-DC, it is consequently possible to achieve efficient utilization of radio resources and to avoid erroneous setting on the network side or unintended radiowave radiation.

### (5) Other Embodiments

Although the present invention has been described along with the embodiment, the present invention is not limited to the description of the embodiment, and it is obvious to those skilled in the art that various modifications or changes may be made.

For example, although the EN-DC has been taken as an example in the above embodiment, the above notification operation may be applied to another type of DC (NR-DC or NE-DC) when the same architecture as that of the Intra-band comparable Inter-band EN-DC is applied thereto.

Further, the block diagram used for explaining the above embodiment (Fig. 2) illustrates blocks of functional unit. Those functional blocks (components) can be realized by a desired combination of at least one of hardware and software. A method for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmitting may be called a transmitting unit or a transmitter. For any of the above, as described above, the realization method is not particularly limited to any one method.

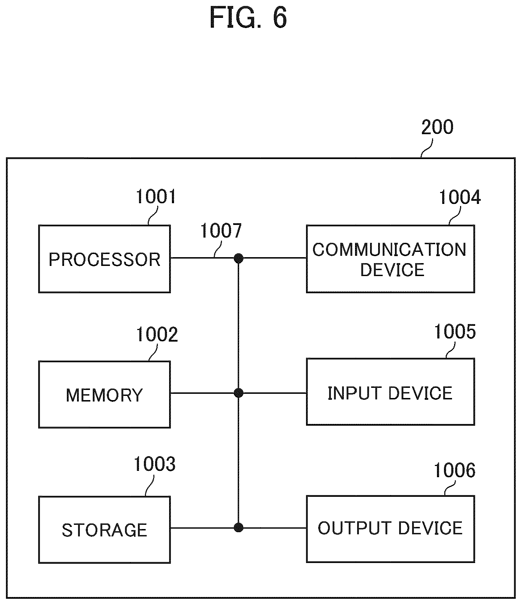

Furthermore, the UE 200 described above can function as a computer that performs the processing of the radio communication method of the present disclosure. Fig. 6 is a view illustrating an example of a hardware configuration of the UE 200. As shown in Fig. 6, the UE 200 can be configured as a computer device including a processor 1001, a memory 1002, a storage 1003, a communication device 1004, an input device 1005, an output device 1006, a bus 1007, and the like.

In the following explanation, the term "device" can be replaced with a circuit, device, unit, and the like. Hardware configuration of the device can be constituted by including one or plurality of the devices illustrated in the drawing, or can be constituted without including a part of the devices.

The functional blocks (see Fig. 2) of the UE 200 can be realized by any of hardware elements of the computer device or a desired combination of the hardware elements.

Further, the processor 1001 performs computing by loading a predetermined software (program) on hardware such as the processor 1001 and the memory 1002, and realizes various functions of the UE 200 by controlling communication via the communication device 1004, and controlling reading and/or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Further, the processor 1001 reads a program (program code), a software module, data, and the like from the storage 1003 and/or the communication device 1004 into the memory 1002, and executes various processes according to the data. As the program, a program that is capable of executing on the computer at least a part of the operation described in the above embodiments is used. Alternatively, various processes described above can be executed by one processor 1001 or can be executed simultaneously or sequentially by two or more processors 1001. The processor 1001 can be implemented by using one or more chips. Alternatively, the program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main storage device), and the like. The memory 1002 can store therein a program (program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a highfrequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information thereamong. The bus 1007 can be constituted by a single bus or can be constituted by separate buses between the devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), upper layer signaling (for example, RRC signaling, Medium Access Control (MAC) signaling, broadcast information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods described above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is described; however, a combination of a plurality of other network nodes (for example, MME and S-GW) may be used.

Information and signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by truth-value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, optical fiber cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling). Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like described in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femto cell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows a communication between a base station and a mobile station to be replaced with a communication between a plurality of mobile stations (for example, may be referred to as Device-to-Device (D2D), Vehicle-to-Everything (V2X), or the like). In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

A radio frame may be constituted of one or a plurality of frames in the time domain. The one or a plurality of frames may be called a subframe in the time domain.

The subframe may be constituted of one or a plurality of slots in the time domain. The subframe may have a fixed time length (for example, 1 ms) independent of numerology.

The numerology may be a communication parameter that is applied to at least one of transmission or reception of a given signal or channel. The numerology may indicate, for example, at least one of Subcarrier Spacing (SCS) bandwidth, symbol length, cyclic prefix length, Transmission Time Interval (TTI), the number of symbols per TTI, radio frame configuration, specific filtering processing that a transmitter/receiver performs in a frequency domain, and specific windowing processing that a transmitter/receiver performs in the time domain.

The slot may be constituted of one or a plurality of symbols (Orthogonal Frequency Division Multiplexing (OFDM) symbol, Single Carrier Frequency Division Multiple Access (SC-FDMA) symbol, etc.). The slot may be a time unit based on the numerology.

The slot may include a plurality of minislots. Each minislot may be constituted of one or a plurality of symbols in the time domain. The minislot may be called a subslot. The minislot may be constituted of symbols the number of which is smaller than the number of slots. The PDSCH (or PUSCH) transmitted in a time unit larger than the minislot may be called PDSCH (or PUSCH) mapping time A. The PDSCH (or PUSCH) transmitted using the minislot may be called PDSCH (or PUSCH) mapping time B.

The radio frame, subframe, slot, minislot, and symbol each represent a time unit in which a signal is transmitted. Another designation may be used for each of the radio frame, subframe, slot, minislot, and symbol.

For example, one subframe may be called Transmission Time Interval (TTI), a plurality of consecutive subframes may be called TTI, or one slot or one minislot may be called TTI. That is, at least one of the subframe and TTI may be a subframe (1 ms) in the existing LTE, a period (for example, 1 to 13 symbols) shorter than 1 ms, or a period longer than 1 ms. The unit representing the TTI may be called, not subframe, but slot, minislot, or the like.

The TTI refers to, for example, the minimum time unit of scheduling in radio communication. For example, in an LTE system, a base station performs scheduling of allocating a radio resource (frequency band width that can be used in each user terminal, transmission power, etc.) to each user terminal in units of TTI. The definition of the TTI is not limited to the above examples.

The TTI may be the transmission time unit of a channel coded data packet (transport block), code block, codeword, or the like, or may be a processing unit of scheduling, link adaptation or the like. When the TTI is given, the time period (for example, the number of symbols) to which the transport block, code block, codeword, or the like is actually mapped may be shorter than the TTI.

When one slot or one minislot is called TTI, one or more TTIs (i.e., one or more slots or one or more minislots) may be the minimum time unit of scheduling. The number of slots (the number of minislots) constituting the minimum time unit of scheduling may be controlled.

The TTI having a time length of 1 ms may be called ordinary TTI (TTI in LTE Rel. 8-12), normal TTI, long TTI, ordinary subframe, normal subframe, long subframe, slot, or the like. The TTI shorter than the ordinary TTI may be called shortened TTI, short TTI, partial or fractional TTI, shortened subframe, short subframe, minislot, subslot, slot, or the like.

The long TTI (for example, ordinary TTI, subframe, etc.) may be replaced with TTI having a time length exceeding 1 ms, and the short TTI (for example, shortened TTI, etc.) may be replaced with TTI having a TTI length of 1 ms or more and less than the TTI length of the long TTI.

A resource block (RB) is a resource allocation unit in the time domain and frequency domain, and may include one or a plurality of consecutive subcarriers in the frequency domain. The number of subcarriers included in the RB may be constant irrespective of the numerology and may be, for example, 12. The number of subcarriers included in the RB may be determined based on the numerology.

Further, the RB may include one or a plurality of symbols in the time domain, and may be a length of one slot, one minislot, one subframe, or one TTI. Each of one TTI and one subframe may be constituted of one or a plurality of resource blocks.

One or a plurality of RBs may be called a physical resource block (Physical RB: PRB), subcarrier group (SubCarrier Group: SCG), (Resource Element Group: REG), PRB pair, RB pair, or the like.

Further, the resource block may be constituted of one or a plurality of resource elements (Resource Element; RE). For example, one RE may be a radio resource region of one subcarrier and one symbol.

A bandwidth part (Bandwidth Part: BWP), (which may be called a partial band width) may represent a subset of consecutive common RBs (common resource blocks) for given numerology in a given carrier. The common RB may be identified by RB index starting from a common reference point of the carrier. The PRB may be defined by a given BWP and numbered in the BWP.

The BWP may include BWP for UL (UL BWP) and BWP for DL (DL BWP). One or a plurality of BWPs may be set for UE in one carrier.

At least one of the set BWPs may be active, and the UE need not assume that it transmits/receives a predetermined signal/channel outside the active BWP. The terms "cell", "carrier" and the like in the present disclosure may be replaced with "BWP".

The structures of the above-mentioned radio frame, subframe, slot, minislot, symbol and the like are only illustrative. For example, it is possible to modify, in various manners, configurations of the number of subframes included in the radio frame, the number of slots per subframe or radio frame, the number of minislots included in the slot, the numbers of symbols and RBs included in the slot or minislot, the number of subcarriers included in the RB, the number of symbols within the TTI, the symbol length, the cyclic prefix (CP) length and the like.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be replaced with "access". In the present disclosure, two elements can be "connected" or "coupled" to each other by using one or more wires, cables, printed electrical connections, and as some non-limiting and non-exhaustive examples, by using electromagnetic energy having wavelengths in the radio frequency domain, the microwave region and the light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The term "means" in the configurations of the above devices may be replaced with "part", "circuit", "device", or the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as "a", "an", and "the" in English are added, in this disclosure, these articles shall include plurality of nouns following these articles.

The term "determining" used in the present disclosure may include various types of operation. For example, "determining" may be regarded as judging, calculating, computing, processing, deriving, investigating, looking up (e.g., looking up (search, inquiry) in a table, database or another data structure), ascertaining and the like. Further, "determining" may be regarded as "determining" receiving (e.g., receiving information), transmitting (e.g., transmitting information), input, output, accessing (e.g., accessing data in memory) and the like. Furthermore, "determining" may be regarded as "determining" resolving, selecting, choosing, establishing, comparing and the like. In other words, "determining" may be regarded as "determining" some operation. Furthermore, the "determining" may be replaced with "assuming", "expecting", "considering", or the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the scope of the present invention as defined by the claims. Therefore, the description of the present disclosure is for the purpose of illustration, and does not have any restrictive meaning to the present disclosure.

### Reference Signs List

- 10: radio communication system
- 20: RAN
- 100A: eNB
- 100B: gNB
- 200: UE
- 210: radio transmission part
- 220: radio reception part
- 230: band combination determination part
- 240: control part
- 250: capability transmission part
- 1001: processor
- 1002: memory
- 1003: storage
- 1004: communication device
- 1005: input device
- 1006: output device
- 1007: bus

## Claims

1. A terminal (200) comprising:
a control part (240) configured to configure contiguous allocation or non-contiguous allocation on frequency of carriers that the terminal (200) supports; and
a transmission part (210) configured to transmit, to a radio base station (100A, 100B), allocation information that indicates the configured allocation, wherein
the allocation information indicates a band combination defined for an inter-band dual connectivity, and
a frequency range of a first band within the allocation information is a part of a frequency range of a second band defined for an intra-band dual connectivity.

2. The terminal (200) according to claim 1, wherein the allocation information indicates allocation of component carriers that are supported by the terminal (200) supporting the carriers even when at least part of the band combinations defined for the inter-band dual connectivity is applied to specifications for the intra-band dual connectivity.

3. A radio base station (100A, 100B) comprising:
a reception part configured to receive, from a terminal (200), allocation information that indicates contiguous allocation or non-contiguous allocation on frequency of carriers that the terminal (200) supports; and
a control part configured to configure the indicated allocation based on the allocation information, wherein
the allocation information indicates a band combination defined for an inter-band dual connectivity, and
a frequency range of a first band within the allocation information is a part of a frequency range of a second band defined for an intra-band dual connectivity.

4. A radio communication system (10) including a terminal (200) and a radio base station (100A, 100B), wherein
the terminal (200) comprises:
a control part (240) configured to configure contiguous allocation or non-contiguous allocation on frequency of carriers that the terminal (200) supports; and
a transmission part (210) configured to transmit, to the radio base station (100A, 100B), allocation information that indicates the configured allocation, and
the radio base station (100A, 100B) comprises a reception part configured to receives the allocation information from the terminal (200), wherein
the allocation information indicates a band combination defined for an inter-band dual connectivity, and
a frequency range of a first band within the allocation information is a part of a frequency range of a second band defined for an intra-band dual connectivity.

5. A radio communication method comprising the steps of:
configuring contiguous allocation or non-contiguous allocation on frequency of carriers that the terminal supports; and
transmitting, to a radio base station, allocation information that indicates the configured allocation, wherein
the allocation information indicates a band combination defined for an inter-band dual connectivity, and
a frequency range of a first band within the allocation information is a part of a frequency range of a second band defined for an intra-band dual connectivity.

## Patentansprüche

1. Endgerät (200), umfassend:
einen Steuerteil (240), der dazu konfiguriert ist, eine zusammenhängende Zuweisung oder eine nicht zusammenhängende Zuweisung auf Frequenzen von Trägern zu konfigurieren, die das Endgerät (200) unterstützt; und
einen Übertragungsteil (210), der dazu konfiguriert ist, an eine Funkbasisstation (100A, 100B) Zuweisungsinformationen zu übermitteln, die die konfigurierte Zuweisung angeben, wobei
die Zuweisungsinformationen eine für eine Interband-Dualkonnektivität definierte Bandkombination angeben, und
ein Frequenzbereich eines ersten Bandes innerhalb der Zuweisungsinformationen ein Teil eines Frequenzbereichs eines zweiten Bandes ist, das für eine Intraband-Dualkonnektivität definiert ist.

2. Endgerät (200) nach Anspruch 1, wobei die Zuweisungsinformationen eine Zuweisung von Komponententrägern angeben, die von dem Endgerät (200), das die Träger unterstützt, auch dann unterstützt werden, wenn zumindest ein Teil der für die Interband-Dualkonnektivität definierten Bandkombinationen auf Spezifikationen für die Intraband-Dualkonnektivität angewendet wird.

3. Funkbasisstation (100A, 100B), umfassend:
einen Empfangsteil, der dazu konfiguriert ist, von einem Endgerät (200) Zuweisungsinformationen zu empfangen, die eine zusammenhängende Zuweisung oder eine nicht zusammenhängende Zuweisung auf Frequenzen von Trägern angeben, die das Endgerät (200) unterstützt; und
einen Steuerteil, der dazu konfiguriert ist, die angegebene Zuweisung basierend auf den Zuweisungsinformationen zu konfigurieren, wobei
die Zuweisungsinformationen eine für eine Interband-Dualkonnektivität definierte Bandkombination angeben, und
ein Frequenzbereich eines ersten Bandes innerhalb der Zuweisungsinformationen ein Teil eines Frequenzbereichs eines zweiten Bandes ist, das für eine Intraband-Dualkonnektivität definiert ist.

4. Funkkommunikationssystem (10), einschließend ein Endgerät (200) und eine Funkbasisstation (100A, 100B), wobei
das Endgerät (200) Folgendes umfasst:
einen Steuerteil (240), der dazu konfiguriert ist, eine zusammenhängende Zuweisung oder eine nicht zusammenhängende Zuweisung auf Frequenzen von Trägern zu konfigurieren, die das Endgerät (200) unterstützt; und
einen Übertragungsteil (210), der dazu konfiguriert ist, Zuweisungsinformationen, die die konfigurierte Zuweisung angeben, an die Funkbasisstation (100A, 100B) zu senden, und
die Funkbasisstation (100A, 100B) einen Empfangsteil umfasst, der dazu konfiguriert ist, die Zuweisungsinformationen vom Endgerät (200) zu empfangen, wobei
die Zuweisungsinformationen eine für eine Interband-Dualkonnektivität definierte Bandkombination angeben, und
ein Frequenzbereich eines ersten Bandes innerhalb der Zuweisungsinformationen ein Teil eines Frequenzbereichs eines zweiten Bandes ist, das für eine Intraband-Dualkonnektivität definiert ist.

5. Funkkommunikationsverfahren, umfassend die Schritte von:
Konfigurieren einer zusammenhängenden Zuweisung oder einer nicht zusammenhängenden Zuweisung für die vom Endgerät unterstützten Trägerfrequenzen; und
Senden, an eine Funkbasisstation, von Zuweisungsinformationen, die die konfigurierte Zuweisung angeben, wobei
die Zuweisungsinformationen eine für eine Interband-Dualkonnektivität definierte Bandkombination angeben, und
ein Frequenzbereich eines ersten Bandes innerhalb der Zuweisungsinformationen ein Teil eines Frequenzbereichs eines zweiten Bandes ist, das für eine Intraband-Dualkonnektivität definiert ist.

## Revendications

1. Terminal (200) comprenant :
une partie de commande (240) configurée pour configurer une allocation contiguë ou non contiguë sur la fréquence des porteuses que le terminal (200) prend en charge ; et
une partie de transmission (210) configurée pour transmettre, à une station de base radio (100A, 100B), des informations d'allocation qui indiquent l'allocation configurée ; dans lequel
les informations d'allocation indiquent une combinaison de bandes définie pour une double connectivité inter-bandes, et
une plage de fréquences d'une première bande dans les informations d'allocation fait partie d'une plage de fréquences d'une deuxième bande définie pour une double connectivité intra-bande.

2. Terminal (200) selon la revendication 1, dans lequel les informations d'allocation indiquent l'allocation de porteuses composantes qui sont prises en charge par le terminal (200) prenant en charge les porteuses même lorsqu'au moins une partie des combinaisons de bandes définies pour la double connectivité inter-bandes est appliquée aux spécifications pour la double connectivité intra-bande.

3. Station de base radio (100A, 100B), comprenant :
une partie réception configurée pour recevoir, depuis un terminal (200), des informations d'allocation qui indiquent une allocation contiguë ou non contiguë sur la fréquence des porteuses que le terminal (200) prend en charge ; et
une partie de commande configurée pour configurer l'allocation indiquée sur la base des informations d'allocation, dans laquelle
les informations d'allocation indiquent une combinaison de bandes définie pour une double connectivité inter-bandes, et
une plage de fréquences d'une première bande dans les informations d'allocation fait partie d'une plage de fréquences d'une deuxième bande définie pour une double connectivité intra-bande.

4. Système de communication radio (10) incluant un terminal (200) et une station de base radio (100A, 100B), dans lequel
le terminal (200) comprend :
une partie de commande (240) configurée pour configurer une allocation contiguë ou non contiguë sur la fréquence des porteuses que le terminal (200) prend en charge ; et
une partie de transmission (210) configurée pour transmettre, à la station de base radio (100A, 100B), des informations d'allocation qui indiquent l'allocation configurée, et
la station de base radio (100A, 100B) comprend une partie de réception configurée pour recevoir les informations d'allocation provenant du terminal (200), dans lequel
les informations d'allocation indiquent une combinaison de bandes définie pour une double connectivité inter-bandes, et
une plage de fréquences d'une première bande dans les informations d'allocation fait partie d'une plage de fréquences d'une deuxième bande définie pour une double connectivité intra-bande.

5. Procédé de communication radio comprenant les étapes consistant à :
configurer une allocation contiguë ou non contiguë sur la fréquence des porteuses que le terminal prend en charge ; et
transmettre, à une station de base radio, des informations d'allocation qui indiquent l'allocation configurée, dans lequel
les informations d'allocation indiquent une combinaison de bandes définie pour une connectivité duale inter-bandes, et
une plage de fréquences d'une première bande dans les informations d'allocation fait partie d'une plage de fréquences d'une deuxième bande définie pour une double connectivité intra-bande.
